# EUROPEAN PATENT SPECIFICATION

(11) **EP 1 482 759 B1**
(45) Date of publication and mention of the grant of the patent: **18.05.2011**
(21) Application number: 04397002.9
(22) Date of filing: 20.01.2004
(51) Int. Cl.: H04W 64/00

(54) **Associating a client profile to a traveling subscriber**
Zuordnung eines Kundenprofils zu einem sich bewegenden Teilnehmer
Association d'un profile de client à un abonné en mouvement

(30) Priority: 21.01.2003 FI 20030086
(43) Date of publication of application: 01.12.2004
(73) Proprietor: Elisa OYJ, 00520 Helsinki (FI)
(72) Inventor: Nykopp, Juha, 00100, Helsinki (FI); Knuuttila, Olli, 02700, Kauniainen (FI)
(74) Representative: Savela, Antti-Jussi Tapani

(56) References cited:
- WO-A-02/03350
- WO-A-02/43026
- US-B1- 6 188 905
- MOULY M ET AL: "MOBILITY AND SECURITY MANAGEMENT" GSM SYSTEM FOR MOBILE COMMUNICATIONS, LASSAY-LES-CHATEAUX, EUROPE MEDIA, FR, 1993, pages 432-498, XP000860007

## Description

### Field of the invention

The invention relates to methods for collecting information about traveling subscribers by means of a mobile network.

### Background of the invention

How to use a mobile network for locating subscribers has been known for a long time. Also the use of a mobile network for collecting traffic data is known. The previous patent application of the applicant, FI20012139, describes a method whereby road traffic data is collected utilizing a mobile communication system without making changes in mobile stations and without user actions.

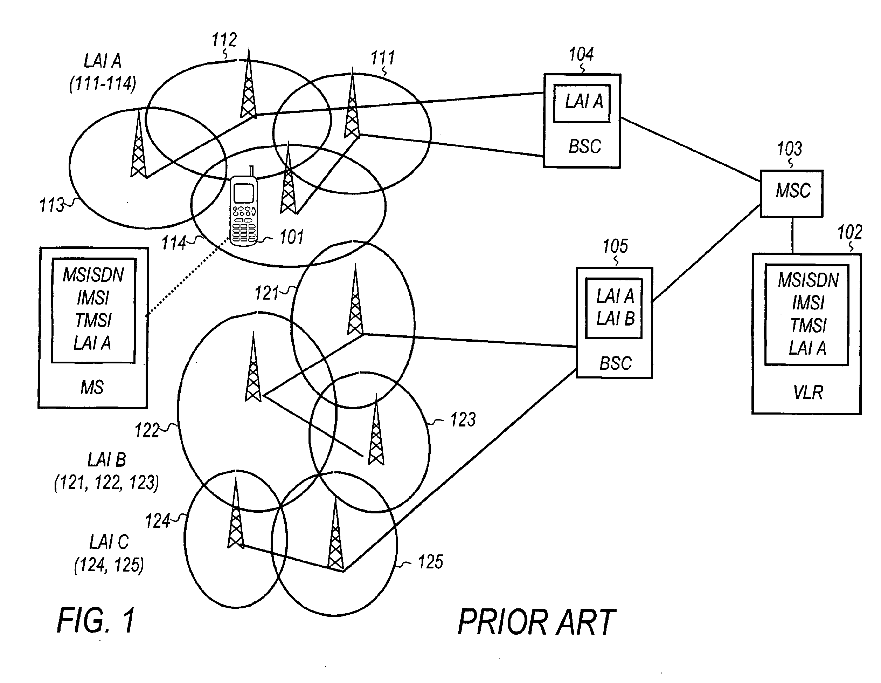

**FIG. 1** shows an example of a mobile network from which the area location data of subscribers is collected. In this example, the terminal **101** is a mobile station located in a GSM network. The mobile station is connected to the network through a radio interface in which the base stations (BTS, Base Transceiver Station) create cells (**111-125**). Each base station is connected to a BSC (Base Station Controller) **104** or **105** located in the network, either directly or by chaining via other base stations. A base station controller controls the operation of the network and adjusts the radio frequencies and time slots used by mobile stations and base stations. This BTS makes the required decisions on the basis of the measurement results sent by network elements and mobile stations. The BTS also routes the traffic received through base stations to an MSC (Mobile Switching Centre) **103**. The VLR (Visitor Location Register) **102** is related to the MSC. The VLR keeps track of the users located in the area and the services subscribed by said users.

The cooperation of system elements is needed for routing a call or a message to a subscriber. An identifier of the centre serving the subscriber is obtained from the HLR (Home Location Register). When the call or the message is routed to the correct MSC **103**, the MSC requests from the VLR **102** the location of the subscriber's mobile station. The VLR sends the LAI (Location Area Identity) in response to the request. Then the MSC sends the BSC **104** the so-called "paging command" for locating the mobile station **101,** after which the BSC commands the base stations **111-114** to call said mobile station.

In general, to enable calls to/from the mobile station/terminal **101**, the mobile station observes the Broadcast Control Channel (BCCH) usable in the cell, for example, at 4 second time intervals. For example, this channel provides information about the frequencies, identifiers, and paging groups which are used by the location cell, i.e. the host cell of the mobile station and its neighbor cells. The CGI (Cell Global Identity) is used as the global identifier of the cell, in addition to which the LAI (Location Area Identity) is obtained from the BCCH. The mobile station measures the broadcast of the host cell and the broadcast of the six others most audible cells. These six cells are declared on the BCCH of the current host cell. When the signal strength of the host cell **114** that the terminal is using, decreases so that it is to a certain proportion weaker than the signal strength of another cell having better audibility, the terminal **101** switches the cell.

The radio network is divided into location areas in order to avoid a search in a larger geographical area when calling a terminal. A number of location areas may be included in the area of one base station controller. When a mobile station switches its cell reciprocating changing of the location area of the mobile station can be avoided using the known hysteresis method.

Since the changing of the location area of a mobile station is closely related to the method of the patent application FI20012139, the method of this application will be discussed in more detail.

The location area LAI A is composed of cells **111-114**, the location area LAI B is composed of cells **121-123**, and the location area LAI C is composed of cells **124** and **125**. When the terminal **101** detects that the LAI of a new cell differs from the LAI of the cell that was the best audible cell a few moments ago, the terminal informs the VLR **102**. The following steps ensure that the terminal **101** is usable in the new cell as soon as possible: 1) the terminal allocates a channel of the new BTS **101** and 2) sends the Location Updating Request to the MSC **103**. Then 3) the said MSC updates the information for the VLR, and 4) the VLR sends a Location Updating Accept message to the terminal **101**. The terminal **101** may travel away from the location area of the VLR **102** to the location area of another VLR. Then the following steps are needed: 3') the new VLR fetches user data from the VLR **102,** 3") the new VLR fetches the user data from HLR. Finally, 3"') the terminal **101** and the new VLR perform the security procedures, 5) the new VLR updates the changed VLR data for the HLR, and 6) the HLR removes the "old" location of the terminal.

Because it is possible to listen to the radio interface, hostile parties could locate users of a mobile network without their knowledge. In order to avoid this, a pseudo identifier, i.e. Temporary Mobile Subscriber Identity (TMSI), is taken into use. The relation between the TMSI and IMSI is stored in the VLR and in the mobile phone. The operator can choose the criteria for changing the TMSI. For example, calls originating from a terminal or the changing of the location area of the terminal may result in the updating of the TMSI. The update is performed using an encryption message, in which a new TMSI is placed in encrypted form. The terminal receives the message, decrypts the encrypted TMSI within its own cipher key, and sends the TMSI Reallocation Complete message to the VLR in order to indicate that the replacement of the TMSI was successful, after which the terminal starts to use the new TMSI.

One embodiment described in the patent application FI20012139 and intended for collecting traffic data is based on the fact that the change of the location area of a mobile phone causes message transmission inside the mobile network. Certain types of messages can be collected from this message transmission and TMSIs of the collected messages read. In addition to the TMSIs, it is possible to obtain the location area of a subscriber at a certain point in time. Then, for example, the average velocities of the subscribers in different road stages can be calculated by means of the TMSIs and the time and location information related to them. The fetching of a TMSI is known in the prior art. It is described, for example, in the document "The GSM System for Mobile Communications by Moyly & Pautet.

It is also known that subscribers can be tracked by means of a mobile network which is implemented as a cellular network. In more detail, when a subscriber turns a terminal on, the terminal communicates with the cellular network after which the cellular network knows the location of the terminal and the subscriber at least on cell level. For example, the document US 6,188,905 B1 describes tracking of subscribers.

The technique described in the patent application FI20012139 can be further developed so that the same technique is also used for purpose other than the collection of traffic data.

### Summary of the invention

One objective of the invention is to define a method by means of which a common mobile network can be used for collecting initial data. The initial data collected can be used in different types of statistical surveys.

The method in accordance with the invention selects border areas of location areas in which a user's terminal and the mobile network are sending messages to each other. The border areas may be road stages as they are in the patent application FI20012139. In general, these border areas are areas through which users can move to areas of interest in a survey, or from which users can move out. The number of different types of users can be calculated by detecting the users' movements in the border areas. If required, the velocities of the users can also be calculated.

The method according to the invention is intended for forming, by means of a mobile network, initial data for a statistical survey.

The method comprises the step of collecting messages related to movements of a plurality of terminals traveling with subscribers of the mobile network to or from an area of interest in the statistical survey. In more detail, movements of the Plurality of terminals take place through the border areas of the location areas of the mobile network. The messages collected by the method belong to a predetermined message set. A terminal and the mobile network communicate in the border areas of the location areas using at least one message of the predetermined message set.

The method further comprises the step of fetching a subscriber identifier from subscriber data stored in a memory when a collected message includes a temporary subscriber identifier.

The method further comprises the step of forming the initial data using subscriber identifiers and movement directions which are related to the subscribers, the initial data disclosing at least the number of the subscribers travelled to or from the area of interest in the statistical survey.

A subscriber identifier used by the method may be, for example, an IMSI that includes the following information: an initial value disclosing a country, an initial value disclosing an operator, and an initial value disclosing a subscriber. Various kinds of statistical surveys can be carried out simply utilizing subscriber identifiers.

In addition to the subscriber identifier other pieces of data, such as a point in time and a site, can be added to the initial data. If a collected message includes a transaction time and/or a transaction site, it is possible to attach to the initial data the said point in time and/or the site. If a transaction time and/or a site is missing from the message, the point in time and/or the site can be stored in a memory when the message is received. Then these reception times and sites are read from the memory and attached to the initial data.

If needed, the content of the initial data can be further extended to form the initial data using a profile database in which data sets are stored. The data sets may originate from a register outside the mobile communication system. The user may also store in the user's profile database the data set.

Another objective of the invention is to define alternative ways to implement a system which utilizes the principles of the method.

The system is intended for collecting information concerning the operation of a subscriber set in a mobile network.

The system is adapted to collect messages related to movements of a terminal set traveling with the subscriber set to or from an intersection area of the location areas of the mobile network. The movements to or from this interesting intersection area take place through the border areas of the location areas of the mobile network. As in the above-described method, the collected messages belong to a predetermined message set.

The system is further adapted to extract data content from the messages, the extracted data disclosing whether the terminal has traveled to or from the certain intersection area of said location areas.

The System is further adapted update at a calculating server the subscriber set's customer profile with the extracted data, the customer profile including at least a counter, the value of which is updated.

The customer profile stored in the profile database includes a data set describing the activity of a subscriber set. The subscriber set is formed of one or more subscribers whose activity in the mobile network affects the data content of the customer profile. On the basis of the customer profiles certain services can be provided for subscribers.

### Brief description of the drawings

The invention is described more closely with reference to the accompanying drawings, in which
- Figure **1**: shows the operation of the prior art mobile communication system,
- Figure **2**: shows as a flow chart the method according to the invention,
- Figure **3A**: illustrates a situation in which a vehicle is moving along a road in a first direction,
- Figure **3B**: illustrates a corresponding situation in which a vehicle is moving along the road in a the opposite direction,
- Figure **4**: illustrates the use of the method in a case in which the number of visitors at an event in a city is monitored,
- Figure **5**: shows examples of systems according to the invention
- Figure **6**: shows a profile database.

### Detailed description of the invention

Since the subscriber identifier contains useful information, it is essential to the inventive method that the subscriber identifier can be mapped for each observation of the location of a user or terminal. The user identifier is especially needed for the purpose of fetching a data set from a database. Each data set is stored so that it is obtainable from a profile database by use of the subscriber identifier. The data sets fetched from a profile database are included in the initial data. The content of the profile database can be changed in regard to the initial data which is required in the statistical survey.

It should be noted that a terminal may be attached to other equipment. For example, a car may include a terminal termed "a black box". As the subscriber identifier identifies the terminal, not the person, the invention may be applicable in countries where it is illegal to locate persons.

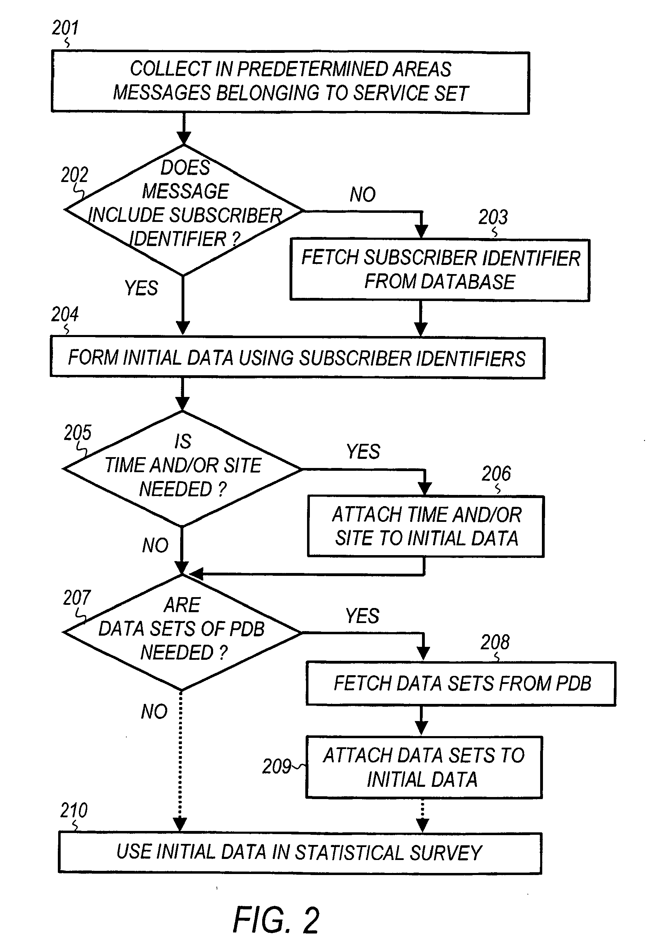

**FIG. 2** shows the inventive method in a flow chart. The method includes the following phases. Messages belonging to a predetermined message set are collected in **201** predetermined areas of a mobile network. In these areas terminals communicate with the network using messages of said message set. If a message includes **202** a subscriber identifier, the method is continued in the next phase. Otherwise, the subscriber identifier is fetched **203**, by means of a temporary identifier, from the subscriber data stored in the memory, from which the temporary identifier in the message is obtained. The initial data is formed **204** using the subscriber identifiers obtained from messages or subscriber data. A message which was sent due to an event, relates to the certain point of time and the site where the event took place. Basically, it depends on the requirements of the statistical survey whether **205** the corresponding point in time and site are needed for the initial data, and if they are needed, how precisely the point in time and the site should be disclosed. Thus, the point of time and the site are included in **206** the initial data when needed. The requirements of the statistical survey also determine **207** whether the data sets obtainable from the profile database (PTK) are needed or not. If they are needed, the data sets are fetched **208** by means of a subscriber identifier, or a part of it, from the PTK and included in **209** the initial data. For example, an IMSI includes three parts: a country, an operator, a subscriber. Therefore, if information related to a certain country of interest for one reason or another, the country part of the IMSI can be used in the search. The profile stored in the profile database may include, for example, country-specific information. The last phase **210** depicts the use of the initial data in the statistical survey. The last phase does not actually belong to the method.

A subscriber identifier can be searched **203** in the memory in which the subscriber data is stored, for example, by means of the MAP (Mobile Application Part) by sending a MAP_SEND_IDENTIFICATION message with the TMSI to the VLR. Then the VLR responds by sending a MAP_SEND_IDENTIFICATION message containing the IMSI.

Messages can be collected continuously, for example, as in the traffic control. Alternatively, messages can be collected only once for a unique statistical survey, when the messages are collected for a predetermined time period. In benchmark testing, messages are collected during at least two separated time periods. The raw data obtained during the first time period are processed separately from the processing of the raw data obtained during the second time period. Then the statistics or corresponding results obtained from the first and second raw data are compared with each other.

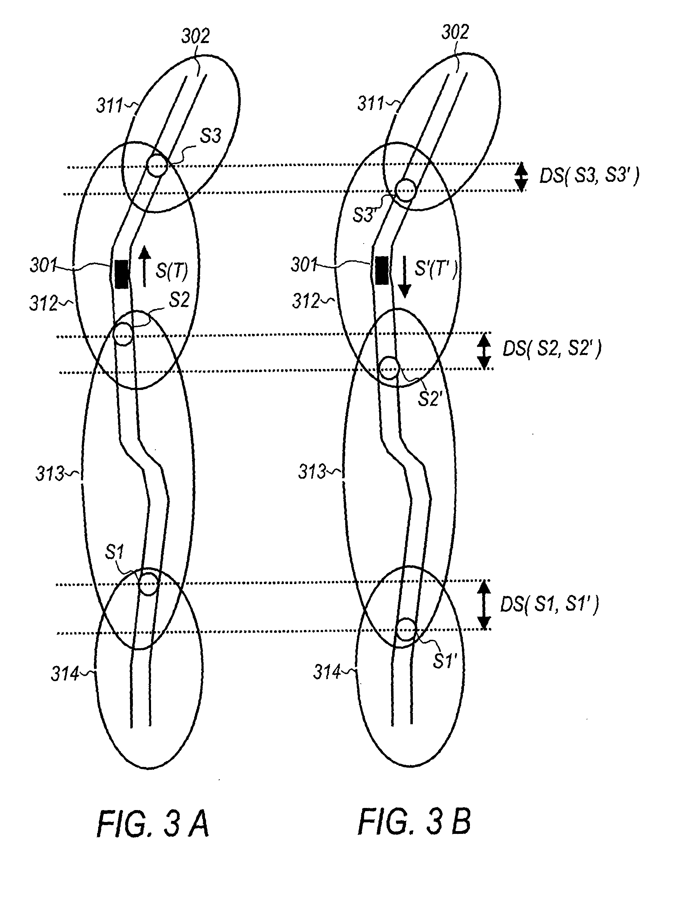

The first example concerns a statistical survey in which the number of users located on a certain road during a certain time period to be ascertained. The survey is performed so that a subscriber identifier is fetched from the subscriber data by means of a temporary subscriber identifier. Then it is possible to observe in the survey how many times the same subscriber has used the same road. Typically, certain basic assumptions are related to statistical surveys. In this case we assume that a certain terminal is in the possession of a certain subscriber. In figures **3A** and **3B** we explain important detail of the invention, i.e. how it is possible to detect that a subscriber has arrived at a certain area and how it is possible to detect that the subscriber has left said area.

**FIG. 3A** illustrates a situation in which a vehicle, i.e. a subscriber **301** of a mobile communication system, moves along a road **302** in a function of time so that the subscriber is located in the location area **312** in the site S(T) at a point in time T. Usually a location area is composed of the cells of a number of base stations, but it is also possible that a location area is composed of a cell/cells of one base station. The location area may be the area disclosed by the LAI (Location Area Identifier), but the area disclosed by the LAC (Location Area Code) which is included in the LAI can also be used as the location area together with the country identifier and the operator identifier. The base stations and cells are omitted from Figure **3A****.** When the subscriber **301** has moved far enough to the site **S3** in the location area **311** so that the location update is performed in accordance with the hysteresis condition, the terminal of the subscriber sends the Location Updating Request message as a signaling message to the network. The TMSI currently allocated to the subscriber is included in the message. If the updating conditions of the TMSI are set so that the TMSI is replaced, the subscriber already has a different TMSI in the location area **311**. When the operation of the network is sufficiently free of delays, the Location Updating Accept message, which is sent as a signaling message, is received at the site **S3**. However, the new signaling message is addressed to a new TMSI, because the TMSI changes when, for example, the VLR and the location area change. The change of a VLR has been described above in the discussion of the background of the invention. If the VLR is replaced, the location area is often replaced, too. The changing of the VLR or the location area creates messages which the method according to the invention collects, because on the basis of the collected messages it is possible to detect a user's arrival to or exit from an area.

If one of the above messages of location positioning is collected from the traffic between the base station and the VLR, it is possible to detect that a user having the identifier TMSI3 is located at the point **S3** in the moment T3. If the corresponding location positioning messages are also collected from the traffic between the location area **312**, the base stations, and the VLR, it is possible to detect that the identifier TMSI2 was previously located at the point **S2** in the moment T2. The messages received from the location area **313** just before that moment could have led to the detection that the point **S1** had already been bypassed at the moment T1 when the identifier TMSI1 was a temporary subscriber identifier.

The situation is easier when the TMSI does not change. Then it is possible to order the system to follow users who arrive, for example, in the areas **S1** and **S3.** When the same identifier is first detected in **S1** and then in **S3,** we may determine that a user has moved along the road in the stages **S1** ― **S3.** We proceed in a similar way, if an IMSI or a static TMSI is used in the message traffic, but then the protection of anonymity is not fully obtainable, i.e. we should understand that a mobile device can be more or less precisely located.

According to tests, the diameter of the location areas **(S1, S2, S3)** is sufficiently a constant, because the resolution of the diameter is about 100-300 meters. Weather conditions, the phone's location in a vehicle, and other corresponding factors effect only a minimal effect on the locating of the location areas, because the location areas on both sides of the location update area suffer from the same type of radio propagation environment. The resolution is mostly derived from the measurement intervals of BCCH measures which a terminal has performed.

**FIG. 3B** illustrates a situation in which the vehicle **302** moves in the opposite direction of the vehicle **301** in Figure **3A****.** When moving in the opposite direction, the location update areas ***(S1', S2', S3')*** are situated according to the hysteresis rule at different points ***(S1, S2, S3)*** than in the location areas in Figure **3A****.** The location update areas are situated in different points, because the required 6 dB difference in both directions results in 12 dB total difference in the signal strength. During good weather this may mean a number of kilometres. Differences are illustrated with dashed lines between Figures **3A** and **3B**. The dashed lines depict the projection of distance difference parallel with the road.

Usually two location update areas are included in the intersection area of two location areas. For example, the location update areas ***S3*** and ***S3'*** are included in the intersection of the location areas **311** and **312.** The information as to the location update area, the base station, or the cell, the location update message discloses the movement direction of a subscriber and the site (a road, a railway, etc.) along which the subscriber is moving from one location area to another.

Let us first observe Figure **3A**. There location update messages are obtained from the area **S1** when the subscriber moves from the location area **314** to the location area **313**, the location update messages are obtained from the area **S2** when the subscriber moves from the location area **313** to the location area **312,** and messages are obtained from the area **S3** when the subscriber moves from the location area **312** to the location area **311**.

Correspondingly, in Figure **3B** a message obtained from the area **S3'** discloses that a subscriber has moved from the location area **311** to the location area **312**, a message obtained from the area **S2'** discloses that the subscriber has moved from the location area **312** to the location area **313**, and a message obtained from the location area **S1'** discloses that the subscriber has moved from the location area **313** to the location area **314**.

The calculation of velocity of a vehicle is discussed in the patent application FI20012139. A temporary subscriber identifier is adequate for calculating velocity, i.e. a subscriber identifier is not needed. The subscriber identifier may be useful when the number of users using a certain road is calculated during relatively long time periods. Statistics can be created by means of subscriber identifiers so that the same subscriber is counted only once. If a temporary subscriber identifier is to be used, each temporary subscriber identifier is counted as a different subscriber.

Another example of how the method can be used concerns road tolls. A road toll can be implemented by attaching a black box to a vehicle. When the vehicle passes a control point of the road toll, the road toll system in accordance with the invention registers the corresponding event.

The third example concerns a statistical survey in which the number of visitors to an event in a city is estimated.

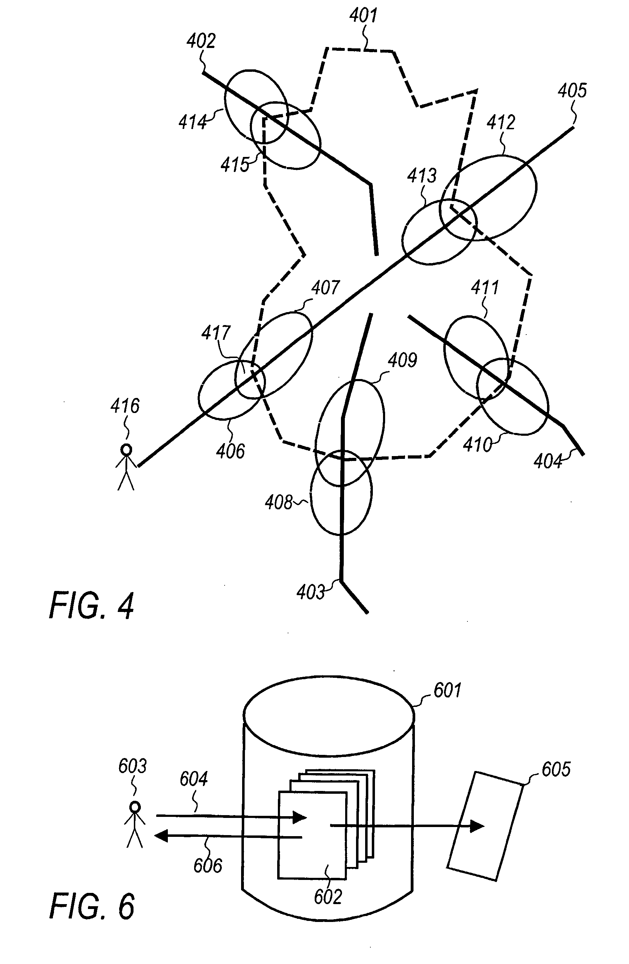

**FIG. 4** shows the geographical area of a city related to the third example. We may assume that thousands of visitors are arriving at the city for the event. Initial data is collected by means of the method and known statistical methods are applied to the initial data resulting in an estimate of the numbers of visitors. If the event continues for several days, the said estimate may be day-specific. In this example we assume that traffic to the city **401** and travels via certain main routes. In other words, a relatively few subscribers moves into or out of the city via side-streets or corresponding minor routes. Three main roads **402, 403**, and **404** lead to the city and the railway **405** passes through the city. Each main road is situated within two location areas, by means of which movement of users is detected. In addition, four location areas are related to the railway, two of which are situated on one side of the city and two others on the other side of the city. The location areas are marked with **406-415**. For example, if the subscriber **416** arrives in a train to the city via the location areas **406** and **407**, a movement direction of the subscriber **416** is "toward the city". The movement direction is detected in the border areas of the location areas **406** and **407**, i.e. in the intersection area **417**. Location update messages are generated in the geographical area of the intersection area. The location update areas (2 areas) are omitted from Figure **4**. As the messages generated in them are interpreted in the same way as in Figures **3A** and **3B**.

In this type of statistical survey it is recommended that the initial data is collected during the city event. In this way is obtained data with which the initial data collected during the city event can be compared. If the city event lasts less than twenty-four hours and if it is anticipated that the visitors just visit the city briefly and leave the city soon after the event, the amount of visitors can be estimated so that the number of subscribers departing is subtracted from the number of subscribers arriving in the city. The initial data formed by the method includes a subscriber identifier. When the subscriber identifier is IMSI, it is simultaneously the initial data that discloses a country. The country corresponds with high to the probability nationality of the subscriber. Thus on the basis of the initial data it is possible to make a distribution of the nationality of persons who attend the city event. Detailed instructions concerning the use of the invention are not discussed here, because the method according to the invention concentrates on the formation of initial data. More deteiled instructions can be found in textbooks of statistics.

A system according to the invention is adapted to extract data content from messages which belong to a predetermined message set and which are collected from predetermined location areas of the mobile network, wherein a terminal and the mobile network communicate in border areas of said location areas by using at least one message of the message set. The system is also adapted to update at a calculating server said subscriber set's customer profile, which is stored in a memory.

The main purpose of use may be, for example, collecting a road toll. Another purpose of use is forming the initial data for a statistical survey. The system can also update customer profiles and either provide a service or allow use of the service, if the data content of a profile is of a certain kind.

A data set concerning one subscriber set is termed a customer profile. In a special case a subscriber set is composed of one subscriber. Generally speaking, a subscriber set is composed of subscribers having the same socio-economic characteristics, such as a nationality. Also moving in the same area, or a similar way of using a mobile station may be an example of a characteristic which links subscribers together. In the above examples data is fetched from a profile database by means of a subscriber identifier, but it is also possible to store data, such as data describing the activity of subscribers, in the customer profiles of a profile database.

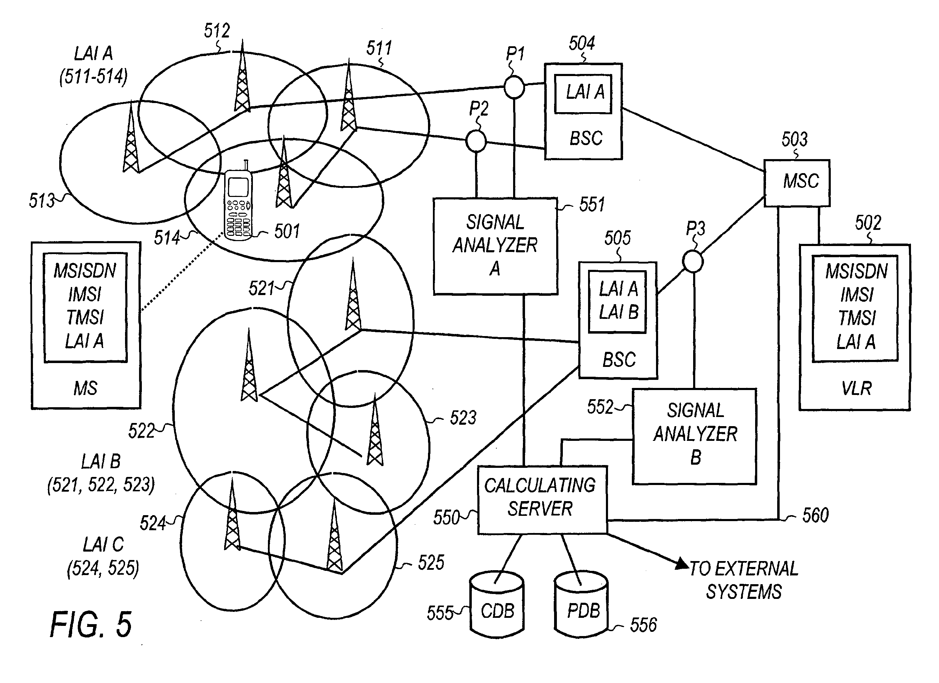

**FIG. 5** shows one way to implement a system in accordance with the invention assuming that the system is constructed within the mobile communication system shown in Figure **1**. The system can be implemented in at least four ways. In a first embodiment network elements, such as signal analyzers **551**, are connected to the mobile communication system. Traffic important for the invention, i.e. the traffic between base stations and base stations controllers, is monitored by means of the network elements. The signal analyzer **551** is preferably connected to the point **P1** in order to monitor signal traffic is led through a 2Mb E1 cable from a base station to a base station controller. More than one signal line can be related to the same base station controller, for example, the point **P2** in Figure **5**. Typically one signal analyzer monitors from eight to sixteen E1 connections, each of which can be connected to 12 transmitter/receiver units, i.e. TRXs, when using the GSM technique. The signal analyzer **551** may include a user interface through which the messages to be monitored and the necessary information can be specified. Alternatively, the corresponding definitions can be programmed in the signal analyzer, but then changing the definitions requires a software upgrade. When the signal analyzer **551** detects on the basis of an identifier a message of a certain type, the signal analyzer collects said message and sends data in accordance with its definitions to an address of the predetermined calculating server **550**. The address of the server may be, for example, an IP address or another network address and/or a port address.

Network elements, such as the signal analyzer **552**, are used in a second embodiment of the system. They are assigned to monitor at the location points **P3** traffic between a base station controller and the exchange **503** or the VLR **502**. Then the system becomes computationally slightly heavier than in the first embodiment. One reason for this is that according to the known ISO model data transmission at a high level requires additional headers to be processed in signal messages.

Base stations, base station controllers, exchanges or a VLR are changed in a third embodiment. In addition to the messages to be monitored, a certain address to which the messages or data from them are sent is defined for each element of the system. Because this embodiment requires major changes in the network elements, its purchase costs may be high.

In a fourth embodiment known charging records, such as the CDR (Charging Data Record), are used in a new way. In this embodiment an exchange of a mobile network, e.g. an MSC, is adapted to write a charging record when a terminal is moved to and out of a certain location area. For example, when the terminal **501** detects that the LAI of a new cell differs from the LAI of the cell that had the best audibility a moment ago, the terminal informs the VLR **502** via the MSC **503**. Then the MSC receives a Location Updating Request message sent by the terminal, writes a charging record, and sends the charging record, or at least a part of its data content **560** directly or via a data storage unit to the calculating server **550.** Depending on equipment deliverer, the data content **560** may include identifier data, such as an IMSI. The calculating server is adapted to receive the data content and use it and any possible identifier data in accordance with the invention.

As described above, the system according to the invention operates in cooperation with the mobile network collecting certain data. If the terminals to be observed are firmly attached to devices, it is possible to interpret that a subscriber's identity is not revealed. It is also possible to use a predetermined threshold value for amount of subscribers so that data of a subscriber set is obtainable from a system only if the number of the subscribers reaches said threshold value.

Each embodiment can be used together with one or more other embodiments. The embodiment 4 can be especially used together with the embodiments 1-3.

In the following certain additional instructions for the embodiments 1-3 are discussed. At least one identifier of a signal analyzer and an identifier of the border area, which may be an address of a base station or a base station controller or an identifier of a location area, is input into the system. As mentioned before, the signal analyzer sends a collected message, or a message containing data from the collected message, to the calculating server **550**. If required, the point in time when the message was received by the calculating server can be used as the precise transaction time. The receiving time corresponds well to the real transaction time, especially when the network is not jammed. At least one subscriber identifier, which is a TMSI or an IMSI depending on a case, is obtained from the message. The message may further include an identifier of a location area and/or the type of collected message. Thus, the calculating server **550** of the system receives messages collected by signal analyzers or the essential data content of the messages. The received messages can be buffered in the calculating server. Then it is possible to detect that a new subscriber identifier appears at a certain location points, for example, at the point ***P1, P2,*** or ***P3.*** In more detail, the new subscriber arrives to a border area of two location areas. The new subscriber identifier is detected when passing through a buffer, at which time the system starts to monitor said subscriber.

When forming initial data for a statistical survey items of data can be fetched from the profile database **556** using a subscriber identifier or a part of it. If required, customer profiles can be added to the profile database and then updated via a data communication network, such as the Internet. It is also possible to provide directly to subscribers means for adding and updating profiles. If the system is intended for calculating the velocities of subscriber movements, the velocities can be stored in the traffic database **555**. If required, the calculating server may have access to the traffic database (***TDB***), the profile database and/or external systems. Additional data can be fetched from the external system and added to the initial data. It is also possible that the ***TDB*** and the profile database (***PDB***) are the same database.

**FIG. 6** shows the profile database **601** of the system, in which customer profiles are stored. Data pertaining to a subscriber set are stored in the customer profile **602.** The customer profile may include counters whose values are increased on the basis of the data **604** describing the activity of the subscriber **603**. In addition to the location data of a subscriber, this sort of data is, for example the charging data of a subscriber. The location data of the subscriber is obtained, for example, from location update messages. The charging data of the subscriber are obtained, for example, from ordinary charging messages or messages which include a CDR (Charging Data Record) or a corresponding charging message. Information gathered in a customer profile can be used for forming the initial data **605**. In addition or alternatively, the information gathered in the customer profile can be used when contacting the subscriber. The system is adapted to send the message **606** to a user, wherein said message may be, for example a short message or an MMS (Multimedia Messaging Service) message. The message may be an advertisement or a message related to a certain service when the subscriber to receive the message is registered for the service. The customer profile stored for said subscriber in a profile database, may include at least one trigger triggering a predefined action, such as sending a message. For example, the trigger of the customer profile may be triggered when the subscriber arrives in a certain area. It is also possible that the trigger is triggered when the counter value of a customer profile reaches a predetermined threshold value. The threshold value may be based on, for example, the number of short messages sent during one month.

In addition to the embodiments and examples for use with the system described above, there are many other embodiments and applications which are obvious for a person skilled in the art.

## Claims

1. A method for forming, by means of a mobile network, initial data for a statistical survey,
**characterized by** the steps of
collecting (201) messages related to movements of a plurality of terminals traveling with subscribers of the mobile network to or from an area of interest in the statistical survey, the movements of the plurality of terminals taking place through the border areas of the location areas of the mobile network, the messages belonging to a predetermined message set, wherein a terminal of said plurality and the mobile network communicate in the border areas of the location areas using at least one message of the predetermined message set, and if a collected message includes a temporary subscriber identifier,
fetching (203) a subscriber identifier from subscriber data stored in a memory, and
forming (204) the initial data using subscriber identifiers fetched from the subscriber data and movement directions related to the subscribers, the initial data disclosing at least the number of the subscribers travelled to or from said area of interest in the statistical survey.

2. The method as described in claim 1, **characterized in that** each subscriber identifier includes an initial value disclosing a country, an initial value disclosing an operator, and an initial value disclosing a subscriber.

3. The method as described in claim 1, **characterized by** the step of
attaching (206) a transaction time and/or a transaction site to the initial data when the collected message includes the transaction time and/or transaction site.

4. The method as described in claim 1, **characterized by** the step of
storing a transaction time and/or a transaction site in a memory when the transaction time and/or transaction site is missing from the collected message.

5. The method as described in claim 4, **characterized**, when forming the initial data, by the steps of
reading each transaction time and/or transaction site stored in the memory and
attaching (206) the transaction time and/or transaction site to the initial data.

6. The method as described in claim 1, **characterized in that** at least one data set is stored in a profile database (601) in order to form the initial data.

7. The method as described in claim 6, **characterized in that** a data set relating to a certain subscriber set forms a customer profile (602).

8. The method as described in claim 6, **characterized by** the steps of
fetching (208) a data set from the profile database (601) by using a certain part of the subscriber data as a search key and
attaching (209) the data set to the initial data.

9. Method as described in claim 1 **characterized by** the steps of
using the method during a first time period and
using the method during a second time period resulting in initial data, which is formed in the first time period, and other initial data formed in the second time period.

10. Method as described in claim 1, **characterized in that** each of said location areas has its own LAC (Location Area Code).

11. Method as described in claim 1, **characterized in that** the messages collected by the method are location update requests and/or "location updated" messages.

12. Method as described in claim 1, **characterized in that** the messages collected by the method are used in charging.

13. Method as described in claim 1, **characterized in that** the subscriber identifier is fetched from a VLR (Visitor Location Register) by sending in accordance with the MAP protocol (Mobile Application Part) a temporary subscriber identifier in a MAP_SEND_IDENTIFICATION message to the VLR.

14. A system for collecting information concerning the operation of a subscriber set in a mobile network, the subscriber set comprising at least one subscriber,
**characterized in that** the system is adapted to
collect messages related to movements of a terminal set (301) traveling with said subscriber set to or from a certain intersection area of the location areas (311, 312) of the mobile network, said movements taking place through the border areas (S3, S3') of the location areas (311, 312) of the mobile network, the collected messages belonging to a predetermined message set, wherein a terminal of the terminal set and the mobile network communicate in the border areas (S3, S3') of the location areas using at least one message of the predetermined message set,
extract data content from the collected messages, the extracted data disclosing whether the terminal has traveled to or from the certain intersection area of said location areas,
update at a calculating server of the system the subscriber set's customer profile (602) with the extracted data, the customer profile including at least a counter, the value of which is updated.

15. The system as described in claim 14, **characterized in that** each of the location areas has its own LAC (Location Area Code).

16. The system as described in claim 14, **characterized in that** a movement to at least one area of interest in a statistical survey and another movement from the area of interest in the statistical survey take place through said border areas of the location areas.

17. The system as described in claim 14, **characterized in that** the collected messages are location update requests and/or "location updated" messages,

18. The system as described in claim 14, **characterized in that** the collected messages are used in charging.

19. The system as described in claim 14, **characterized in that** the system is adapted to monitor, by means of a signal analyzer (551 or 552), message traffic between at least one base station controller (504 or 505) of the mobile network and another network element.

20. The system as described in claim 19, **characterized in that** the other network element is one of the following elements: a base station, a VLR, or an exchange.

21. The system as described in claim 14, **characterized in that** the system is further adapted to
collect a message belonging to the predetermined message set when the signal analyzator (551 or 552) detects said message and
send at least part of the data content of the collected message to the calculating server (550).

22. The system as described in claim 14, **characterized in that** the system is adapted to
form a charging record at a mobile network centre in response to the message, which the terminal sends when moving in the border areas, and
send at least part of the data content of the charging record to the calculating server.

23. The system as described in claim 14, **characterized in that** the mobile network centre is an MSC (Mobile Switching Centre) (503).

24. The system as described in claim 14, **characterized in that** when the data content comprises the temporary subscriber identifier, the system is further adapted to fetch the subscriber identifier that corresponds to the temporary subscriber identifier.

25. The system as described in claim 14, **characterized in that** the system is further adapted to
buffer the data content received by the calculating server, and by means of buffering,
detect a new subscriber arriving in a border area of two location areas.

26. The system as described in claim 14, **characterized in that** the system is further adapted to determine, on the basis of received data content, the transmission time and/or the transmission site.

27. The system as described in claim 14, **characterized in that** the customer profile includes a trigger, which is triggered by a predetermined transaction, resulting in the starting of a predetermined action.

28. The system as described in claim 27, **characterized in that** the trigger is triggered when the value of said counter reaches a predetermined threshold-value.

29. The system as described in claim 27, **characterized in that** the system is adapted to send at least one message to at least one subscriber when the trigger is triggered.

30. The system as described in claim 18, **characterized in that** the customer profile (602) is stored in a profile database (556 or 601).

31. The system as described in claim 30, **characterized in that** a subscriber is able to update through a user interface of the profile database at least one data item of the customer profile.

32. The system as described in claim 30, **characterized in that** it is possible to add a customer profile to the profile database through a user interface of the profile database.

33. The system as described in claim 30, **characterized in that** the system is further adapted to
read customer profiles stored in the profile database and
form on the basis of data content of the customer profiles the initial data to be used in the statistical survey.

34. The system as described in claim 14, **characterized in that** the terminal is in inseparably attached to certain equipment.

35. The system as described in claim 14, **characterized in that** the system is adapted to deliver information related to the subscriber set only when the number of subscribers of the subscriber set reaches a predetermined threshold value.

## Patentansprüche

1. Verfahren zur Erzeugung mittels eines Mobilnetzes von Ausgangsdaten für eine statistische Erhebung,
**gekennzeichnet durch** die folgenden Schritte:
sammeln (201) von Nachrichten, die mit Bewegungen einer Mehrzahl von Endgeräten in Beziehung stehen, die sich mit Teilnehmern des Mobilnetzes in einen und aus einem Bereich von Interesse in der statistischen Erhebung bewegen, wobei die Bewegungen der Mehrzahl von Endgeräten **durch** die Grenzbereiche der Aufenthaltsgebiete des Mobilnetzes erfolgen, und die Nachrichten zu einem vorbestimmten Nachrichtensatz gehören, wobei ein Endgerät der Mehrzahl und das Mobilnetz in den Grenzbereichen der Aufenthaltsgebiete unter Verwendung wenigstens einer Nachricht des vorbestimmten Nachrichtensatzes kommunizieren, wenn eine gesammelte Nachricht eine temporäre Teilnehmerkennung enthält,
abrufen (203) einer Teilnehmerkennung aus Teilnehmerdaten, die in einem Speicher gespeichert sind, und
erzeugen (204) der Ausgangsdaten unter Verwendung von Teilnehmerkennungen, die aus den Teilnehmerdaten abgerufen werden, und Bewegungsrichtungen, die mit den Teilnehmern in Beziehung stehen, wobei die Ausgangsdaten wenigstens die Anzahl der Teilnehmer offenbaren, die sich in den oder aus dem Bereich von Interesse in der statistischen Erhebung bewegten.

2. Verfahren nach Anspruch 1, **dadurch gekennzeichnet, dass** jede Teilnehmerkennung einen Ausgangswert, der ein Land offenbart, einen Ausgangswert, der einen Betreiber offenbart, und einen Ausgangswert enthält, der einen Teilnehmer offenbart.

3. Verfahren nach Anspruch 1, **gekennzeichnet durch** den folgenden Schritt:
anhängen (206) einer Transaktionszeit und/oder eines Transaktionsortes an die Ausgangsdaten, wenn die gesammelte Nachricht die Transaktionszeit und/oder den Transaktionsort enthält.

4. Verfahren nach Anspruch 1, **gekennzeichnet durch** den folgenden Schritt:
speichern einer Transaktionszeit und/oder eines Transaktionsortes in einem Speicher, wenn die Transaktionszeit und/oder der Transaktionsort von der gesammelten Nachricht fehlen.

5. Verfahren nach Anspruch 4, **gekennzeichnet durch** den folgenden Schritt beim Erzeugen der Ausgangsdaten:
auslesen jeder Transaktionszeit und/oder jedes Transaktionsortes, die im Speicher gespeichert sind, und
anhängen (206) der Transaktionszeit und/oder des Transaktionsortes an die Ausgangsdaten.

6. Verfahren nach Anspruch 1, **dadurch gekennzeichnet, dass** wenigstens ein Datensatz in einer Profildatenbank (601) gespeichert wird, um die Ausgangsdaten zu erzeugen.

7. Verfahren nach Anspruch 6, **dadurch gekennzeichnet, dass** ein Datensatz, der mit einem bestimmten Teilnehmer in Beziehung steht, ein Kundenprofil bildet (602).

8. Verfahren nach Anspruch 6, **gekennzeichnet durch** die folgenden Schritte:
abrufen (208) eines Datensatzes aus der Profildatenbank (601) durch Verwenden eines bestimmten Teils der Teilnehmerdaten als Suchbegriff und
anhängen (209) des Datensatzes an die Ausgangsdaten.

9. Verfahren nach Anspruch 1, **gekennzeichnet durch** die folgenden Schritte:
verwenden des Verfahrens während einer ersten Zeitdauer und
verwenden des Verfahrens während einer zweiten Zeitdauer, die zu Ausgangsdaten, die in der ersten Zeitdauer erzeugt werden, und anderen Ausgangsdaten führen, die in der zweiten Zeitdauer erzeugt werden.

10. Verfahren nach Anspruch 1, **dadurch gekennzeichnet, dass** jedes der Aufenthaltsgebiete seine eigene Aufenthaltsgebietskennzahl (LAC) aufweist.

11. Verfahren nach Anspruch 1, **dadurch gekennzeichnet, dass** die Nachrichten, die durch das Verfahren gesammelt werden, Aufenthaltsaktualisierungsanforderungen und/oder "aufenthaltsaktualisierte" Nachrichten sind.

12. Verfahren nach Anspruch 1, **dadurch gekennzeichnet, dass** die Nachrichten, die durch das Verfahren gesammelt werden, bei der Gebührenverrechnung verwendet werden.

13. Verfahren nach Anspruch 1, **dadurch gekennzeichnet, dass** die Teilnehmerkennung aus einem Besucherregister (VLR) durch Senden gemäß dem Mobilanwendungsteil- bzw. MAP-Protokoll einer temporären Teilnehmerkennung in einer MAP_SEND_IDENTIFICATION-Nachricht an das VLR abgerufen wird.

14. System zum Sammeln von Informationen bezüglich des Betriebs eines Teilnehmersatzes in einem Mobilnetz, wobei der Teilnehmersatz mindestens einen Teilnehmer umfasst,
**dadurch gekennzeichnet, dass** das System so ausgelegt, dass es:
Nachrichten sammelt, die mit Bewegungen eines Endgerätesatzes (301) in Beziehung stehen, der sich mit dem Teilnehmersatz in einen oder aus einem bestimmten Schnittbereich der Aufenthaltsgebiete (311, 312) des Mobilnetzes bewegt, wobei die Bewegungen durch die Grenzbereiche (S3, S3') der Aufenthaltsgebiete (311, 312) des Mobilnetzes erfolgen, und die gesammelten Nachrichten zu einem vorbestimmten Nachrichtensatz gehören, wobei ein Endgerät des Endgerätesatzes und das Mobilnetz in den Grenzbereichen (S3, S3') der Aufenthaltsgebiete unter Verwendung mindestens einer Nachricht des vorbestimmten Nachrichtensatzes kommunizieren,
Dateninhalt aus den gesammelten Nachrichten extrahiert, wobei die extrahierten Daten offenbaren, ob sich das Endgerät in den oder aus dem bestimmten Schnittbereich der Aufenthaltsgebiete bewegt hat,
an einem Rechenserver des Systems das Kundenprofil (602) des Teilnehmersatzes mit den extrahierten Daten aktualisiert, wobei das Kundenprofil mindestens einen Zähler enthält, dessen Wert aktualisiert wird.

15. System nach Anspruch 14, **dadurch gekennzeichnet, dass** jedes der Aufenthaltsgebiete seine eigene Aufenthaltsgebietskennzahl (LAC) aufweist.

16. System nach Anspruch 14, **dadurch gekennzeichnet, dass** eine Bewegung in wenigstens einen Bereich von Interesse in einer statistischen Erhebung und eine andere Bewegung aus dem Bereich von Interesse in der statistischen Erhebung durch die Grenzbereiche der Aufenthaltsgebiete erfolgen.

17. System nach Anspruch 14, **dadurch gekennzeichnet, dass** die gesammelten Nachrichten Aufenthaltsaktualisierungsanforderungen und/oder "aufenthaltsaktualisierte" Nachrichten sind.

18. System nach Anspruch 14, **dadurch gekennzeichnet, dass** die gesammelten Nachrichten bei der Gebührenverrechnung verwendet werden.

19. System nach Anspruch 14, **dadurch gekennzeichnet, dass** das System so ausgelegt ist, dass es mittels eines Signalanalysators (551 oder 552) Nachrichtenverkehr zwischen mindestens einer Basisstationssteuerung (504 oder 505) des Mobilnetzes und einem anderen Netzelement überwacht.

20. System nach Anspruch 19, **dadurch gekennzeichnet, dass** das andere Netzelement eines der folgenden Elemente ist: eine Basisstation, ein VLR oder einer Vermittlungsstelle.

21. System nach Anspruch 14, **dadurch gekennzeichnet, dass** das System ferner so ausgelegt ist, dass es:
eine Nachricht sammelt, die zum vorbestimmten Nachrichtensatz gehört, wenn der Signalanalysator (551 oder 552) die Nachricht erkennt, und
wenigstens einen Teil des Dateninhalts der gesammelten Nachricht an den Rechenserver (550) sendet.

22. System nach Anspruch 14, **dadurch gekennzeichnet, dass** das System so ausgelegt ist, dass es:
einen Gebührenverrechnungsdatensatz in einer Mobilnetzzentrale als Reaktion auf die Nachricht erzeugt, welche das Endgerät sendet, wenn es sich in den Grenzbereichen bewegt, und
wenigstens einen Teil des Dateninhalts des Gebührenverrechnungssatzes an den Rechenserver (550) sendet.

23. System nach Anspruch 14, **dadurch gekennzeichnet, dass** die Mobilnetzzentrale eine Mobilfunkvermittlungsstelle (MSC) (503) ist.

24. System nach Anspruch 14, **dadurch gekennzeichnet, dass** das System ferner so ausgelegt ist, dass es, wenn der Dateninhalt die temporäre Teilnehmerkennung umfasst, die Teilnehmerkennung abruft, die der temporären Teilnehmerkennung entspricht.

25. System nach Anspruch 14, **dadurch gekennzeichnet, dass** das System ferner so ausgelegt ist, dass es:
den Dateninhalt puffert, der durch den Rechenserver empfangen wird, und durch Puffern
einen neuen Teilnehmer erkennt, der in einem Grenzbereich von zwei Aufenthaltsgebieten ankommt.

26. System nach Anspruch 14, **dadurch gekennzeichnet, dass** das System ferner so ausgelegt ist, dass es auf der Basis von empfangenem Dateninhalt die Sendezeit und/oder den Sendeort bestimmt.

27. System nach Anspruch 14, **dadurch gekennzeichnet, dass** das Kundenprofil einen Auslöser enthält, der durch eine vorbestimmte Transaktion ausgelöst wird, was zum Start einer vorbestimmten Aktion führt.

28. System nach Anspruch 27, **dadurch gekennzeichnet, dass** der Auslöser ausgelöst wird, wenn der Wert des Zählers einen vorbestimmten Schwellenwert erreicht.

29. System nach Anspruch 27, **dadurch gekennzeichnet, dass** das System so ausgelegt ist, dass es wenigstens eine Nachricht an wenigstens einen Teilnehmer sendet, wenn der Auslöser ausgelöst wird.

30. System nach Anspruch 18, **dadurch gekennzeichnet, dass** das Kundenprofil (602) in einer Profildatenbank (556 oder 601) gespeichert ist.

31. System nach Anspruch 30, **dadurch gekennzeichnet, dass** ein Teilnehmer durch eine Benutzerschnittstelle der Profildatenbank wenigstens ein Datenelement des Kundenprofils aktualisieren kann.

32. System nach Anspruch 30, **dadurch gekennzeichnet, dass** es möglich ist, ein Kundenprofil durch eine Benutzerschnittstelle der Profildatenbank zu der Profildatenbank hinzuzufügen.

33. System nach Anspruch 30, **dadurch gekennzeichnet, dass** das System ferner so ausgelegt ist, dass es:
Kundenprofile ausliest, die in der Profildatenbank gespeichert sind, und
auf der Basis von Dateninhalt der Kundenprofile die Ausgangsdaten erzeugt, die in der statistischen Erhebung verwendet werden sollen.

34. System nach Anspruch 14, **dadurch gekennzeichnet, dass** das das Endgerät untrennbar mit einer bestimmten Einrichtung verbunden ist.

35. System nach Anspruch 14, **dadurch gekennzeichnet, dass** das System so ausgelegt ist, dass es nur dann Informationen liefert, die mit dem Teilnehmersatz in Beziehung stehen, wenn die Anzahl von Teilnehmern des Teilnehmersatzes einen vorbestimmten Schwellenwert erreicht.

## Revendications

1. Procédé pour former, au moyen d'un réseau mobile, des données initiales pour une étude statistique,
**caractérisé par** les étapes consistant à :
collecter (201) des messages associés à des mouvements d'une pluralité de terminaux se déplaçant avec des abonnés du réseau mobile à destination ou en provenance d'une zone d'intérêt dans l'étude statistique, les mouvements de la pluralité de terminaux se déroulant à travers les zones frontières des zones d'emplacement du réseau mobile, les messages appartenant à un ensemble prédéterminé de messages, dans lequel un terminal de ladite pluralité et le réseau mobile communiquent dans les zones frontières des zones d'emplacement en utilisant au moins un message de l'ensemble prédéterminé de messages, et si un message collecté comprend un identifiant d'abonné temporaire,
rechercher (203) un identifiant d'abonné parmi les données d'abonnés stockées dans une mémoire, et
former (204) les données initiales en utilisant les identifiants d'abonnés recherchés parmi les données d'abonnés et les directions de mouvement associées aux abonnés, les données initiales divulguant au moins le nombre d'abonnés s'étant déplacés à destination ou en provenance de ladite zone d'intérêt dans l'étude statistique.

2. Procédé selon la revendication 1, **caractérisé en ce que** l'identifiant d'abonné comprend une valeur initiale indiquant un pays, une valeur initiale indiquant un opérateur, et une valeur initiale indiquant un abonné.

3. Procédé selon la revendication 1, **caractérisé par** l'étape consistant à :
attacher (206) une heure de transaction et/ou un site de transaction aux données initiales lorsque le message collecté comprend l'heure de transaction et/ou le site de transaction.

4. Procédé selon la revendication 1, **caractérisé par** l'étape consistant à :
stocker une heure de heure de transaction et/ou un site de transaction dans une mémoire lorsque l'heure de transaction et/ou le site de transaction ne se trouvent pas dans le message collecté.

5. Procédé selon la revendication 4, **caractérisé**, lors de la formation des données initiales, par les étapes consistant à :
lire chaque heure de transaction et/ou chaque site de transaction stockés dans la mémoire, et
attacher (206) l'heure de transaction et/ou le site de transaction aux données initiales.

6. Procédé selon la revendication 1, **caractérisé en ce qu'**au moins un ensemble de données est stocké dans une base de données de profils (601) pour former les données initiales.

7. Procédé selon la revendication 6, **caractérisé en ce qu'**un ensemble de données relatif à un ensemble d'abonnés forme un profil de client (602).

8. Procédé selon la revendication 6, **caractérisé par** les étapes consistant à :
rechercher (208) un ensemble de données dans la base de données de profils (601) en utilisant une certaine partie des données d'abonnés en tant que clé de recherche, et
attacher (209) l'ensemble de données aux données initiales.

9. Procédé selon la revendication 1, **caractérisé par** les étapes consistant à :
utiliser le procédé au cours d'une première période de temps, et
utiliser le procédé au cours d'une deuxième période de temps en engendrant des données initiales, qui sont formées au cours de la première période de temps, et d'autres données initiales qui sont formées au cours de la deuxième période de temps.

10. Procédé selon la revendication 1, **caractérisé en ce que** lesdites zones d'emplacement ont leur propre LAC (Location Area Code - code de zone d'emplacement).

11. Procédé selon la revendication 1, **caractérisé en ce que** les messages collectés par le procédé sont des demandes de mise à jour d'emplacement et/ou des messages « emplacement mis à jour ».

12. Procédé selon la revendication 1, **caractérisé en ce que** les messages collectés par le procédé sont utilisés en chargement.

13. Procédé selon la revendication 1, **caractérisé en ce que** l'identifiant d'abonné est recherché dans un VLR (Visitor Location Register - registre d'emplacement de visiteur) en envoyant, conformément au protocole MAP (Mobile Application Part - partie d'application mobile) un identifiant d'abonné temporaire dans un message MAP_SEND_IDENTIFICATION au VLR.

14. Système pour collecter des informations concernant le fonctionnement d'un ensemble d'abonnés dans un réseau mobile, l'ensemble d'abonnés comprenant au moins un abonné,
**caractérisé en ce que** le système est apte à :
collecter des messages associés à des mouvements d'un ensemble de terminaux (301) se déplaçant avec ledit ensemble d'abonnés à destination ou en provenance d'une zone d'intersection des zones d'emplacement (311, 312) du réseau mobile, lesdits mouvements se déroulant à travers les zones frontières (S3, S3') des zones d'emplacement (311, 312) du réseau mobile, les messages collectés appartenant à un ensemble de messages prédéterminé, dans lequel un terminal de l'ensemble de terminaux et le réseau mobile communiquent dans les zones frontières (S3, S3') des zones d'emplacement en utilisant au moins un message de l'ensemble de messages prédéterminé,
extraire un contenu de données des messages collectés, les données extraites divulguant si le terminal s'est déplacé à destination ou en provenance de la zone d'intersection desdites zones d'emplacement,
mettre à jour, sur un serveur de calcul du système, le profil de client de l'ensemble d'abonnés (602) avec les données extraites, le profil de client comprenant au moins un compteur dont la valeur est mise à jour.

15. Système selon la revendication 14, **caractérisé en ce que** les zones d'emplacement ont leur propre LAC (Location Area Code - code de zone d'emplacement).

16. Système selon la revendication 14, **caractérisé en ce qu'**un mouvement à destination d'au moins une zone d'intérêt dans une étude statistique et un autre mouvement en provenance de la zone d'intérêt dans l'étude statistique se déroulent à travers lesdites zones frontières des zones d'emplacement.

17. Système selon la revendication 14, **caractérisé en ce que** les messages collectés sont des demandes de mise à jour d'emplacement et/ou des messages « emplacement mis à jour ».

18. Système selon la revendication 14, **caractérisé en ce que** les messages collectés sont utilisés en chargement.

19. Système selon la revendication 14, **caractérisé en ce que** le système est apte à surveiller, au moyen d'un analyseur de signal (551 ou 552), le trafic de messages entre au moins un contrôleur de station de base (504 ou 505) du réseau mobile et un autre élément de réseau.

20. Système selon la revendication 19, **caractérisé en ce que** l'autre élément de réseau est l'un des éléments suivants : une station de base, un VLR, ou un échange.

21. Système selon la revendication 14, **caractérisé en ce que** le système est en outre apte à :
collecter un message appartenant à l'ensemble de messages prédéterminé lorsque l'analyseur de signal (551 ou 552) détecte ledit message, et
envoyer au moins une partie du contenu de données du message collecté au serveur de calcul (550).

22. Système selon la revendication 14, **caractérisé en ce que** le système est apte à :
former un enregistrement de chargement au niveau d'un centre de réseau mobile en réponse au message, que le terminal envoie en se déplaçant dans les zones frontières, et
envoyer au moins une partie du contenu de données de l'enregistrement de chargement au serveur de calcul.

23. Système selon la revendication 14, **caractérisé en ce que** le centre de réseau mobile est un MSC (Mobile Switching Centre - centre de commutation mobile) (503).

24. Système selon la revendication 14, **caractérisé en ce que**, lorsque le contenu de données comprend l'identifiant d'abonné temporaire, le système est en outre apte à rechercher l'identifiant d'abonné qui correspond à l'identifiant d'abonné temporaire.

25. Système selon la revendication 14, **caractérisé en ce que** le système est en outre apte à :
mettre en mémoire tampon le contenu de données reçu par le serveur de calcul, et au moyen de la mémoire tampon,
détecter un nouvel abonné arrivant dans une zone frontière de deux zones d'emplacement.

26. Système selon la revendication 14, **caractérisé en ce que** le système est en outre apte à déterminer, sur la base du contenu de données reçu, l'heure de transmission et/ou le site de transmission.

27. Système selon la revendication 14, **caractérisé en ce que** le profil de client comprend un déclencheur qui est déclenché par une transaction prédéterminée, engendrant le démarrage d'une action prédéterminée.

28. Système selon la revendication 27, **caractérisé en ce que** le déclencheur est déclenché lorsque la valeur dudit compteur atteint une valeur de seuil prédéterminée.

29. Système selon la revendication 27, **caractérisé en ce que** le système est apte à envoyer au moins un message à l'au moins un abonné lorsque le déclencheur est déclenché.

30. Système selon la revendication 18, **caractérisé en ce que** le profil de client (602) est stocké dans une base de données de profils (556 ou 601).

31. Système selon la revendication 30, **caractérisé en ce qu'**un abonné est apte à mettre à jour, par le biais d'une interface utilisateur de la base de données de profils, au moins une donnée du profil de client.

32. Système selon la revendication 30, **caractérisé en ce qu'**il est possible d'ajouter un profil de client à la base de données de profils par le biais d'une interface utilisateur de la base de données de profils.

33. Système selon la revendication 30, **caractérisé en ce que** le système est en outre apte à :
lire des profils de clients stockés dans la base de données de profils, et
former, sur la base du contenu de données des profils de clients, les données initiales à utiliser dans l'étude statistique.

34. Système selon la revendication 14, **caractérisé en ce que** le terminal est attaché de manière inséparable à un certain équipement.

35. Système selon la revendication 14, **caractérisé en ce que** le système est apte à fournir des informations associées à l'ensemble d'abonnés uniquement lorsque le nombre d'abonnés de l'ensemble d'abonnés atteint une valeur de seuil prédéterminée.
